(19) Europäisches Patentamt
European Patent Office
Office européen des brevets

(11) **EP 2 487 553 B1**

(12) **EUROPEAN PATENT SPECIFICATION**

(45) Date of publication and mention
of the grant of the patent:
**06.05.2020 Bulletin 2020/19**

(51) Int Cl.:
*G05B 23/02* (2006.01)  *F03D 17/00* (2016.01)

(21) Application number: **11192842.0**

(22) Date of filing: **09.12.2011**

(54) **Turbine fault analysis**

Turbinenstörungsanalyse

Analyse des défaillances de turbine

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.02.2011 US 201161441518 P
08.12.2011 US 201113314526**

(43) Date of publication of application:
**15.08.2012 Bulletin 2012/33**

(73) Proprietor: **Honeywell International Inc.
Morris Plains, NJ 07950 (US)**

(72) Inventor: **Kim, Kyusung
Morristown, NJ New Jersey 07962-2245 (US)**

(74) Representative: **Houghton, Mark Phillip et al
Patent Outsourcing Limited
1 King Street
Bakewell, Derbyshire DE45 1DZ (GB)**

(56) References cited:
**EP-A2- 2 267 305     WO-A1-2009/016020
US-A1- 2005 209 767    US-A1- 2010 138 182
US-A1- 2010 138 267    US-A1- 2011 020 122**

**Description**

<u>Technical Field</u>

The present disclosure relates to devices, methods, and systems for turbine fault analysis.

<u>Background</u>

Two challenges noted in a US Department of Energy issued report titled 20% *Wind Energy by 2030* are the improvement of wind turbine performance and reduction in operating and maintenance costs. For example, after the capital costs of commissioning wind turbine generators, one large cost for owners is maintenance.

A reduction in maintenance and operating costs can reduce payback period considerably and can provide the impetus for investment, in some implementations, and potentially provide for widespread acceptance of this clean energy source. Wind turbines often operate in severe, remote environments and can require frequent scheduled maintenance.

Additionally, the cost of unscheduled maintenance, for example, due to undetected failures can be high in maintenance support and/or lost production time. In response to such potential costs, insurers, for example in the European Union, have begun requiring costly scheduled overhauls to address potential reliability concerns. Condition-based, rather than hours based maintenance, enables high reliability and low maintenance costs by eliminating unnecessary scheduled maintenance, in some implementations.

US2011/020122 discloses a condition based maintenance system for wind turbines. The system is operable for receiving condition information from a plurality of condition detection sensors coupled to a wind turbine and receiving wind turbine controller information. An anomaly detection algorithm is applied to identify maintenance activities for the wind turbine as a function of both the wind turbine condition information and the wind turbine controller information.

SUMMARY OF THE INVENTION

The present invention provides a method according to claim 1 of the appended claims.

<u>Brief Description of the Drawings</u>

Figure 1 illustrates an example of wind turbine operation region data that can be utilized in one or more embodiments of the present disclosure

Figure 2 illustrates an example of variations of a ratio of High Speed Shaft torque to High Speed Shaft speed along with the power level data that can be utilized in one or more embodiments of the present disclosure

Figure 3 illustrates variations of the ratio of High Speed Shaft speed to Low Speed Shaft speed along with the power level data that can be utilized in one or more embodiments of the present disclosure.

Figure 4 illustrates an example of Q-stat and $T^2$ values obtained from Auto-Associative Neural Network using the training data set that can be utilized in one or more embodiments of the present disclosure.

Figure 5 illustrates an example of a result from another baseline case and such data can be utilized in one or more embodiments of the present disclosure.

Figure 6 illustrates a result from data collected on a day when a gearbox failure occurred and such data can be utilized in one or more embodiments of the present disclosure.

Figure 7 and Figure 8 illustrate a result from data collected before the failure and such data can be utilized in one or more embodiments of the present disclosure.

Figure 9 illustrates a result from the training of Self Organizing Feature Map and such data can be utilized in one or more embodiments of the present disclosure.

Figure 10 illustrates alarm trigger conditions based on the fault data and such data can be utilized in one or more embodiments of the present disclosure.

Figure 11 illustrates the result from the data closest to the failure day among the data available and such data can be utilized in one or more embodiments of the present disclosure.

Figure 12 illustrates a comparison among alarms triggers of several different indicators and such data can be utilized in one or more embodiments of the present disclosure.

Figure 13 illustrates a computing system that can be utilized in one or more embodiments of the present disclosure.

<u>Detailed Description</u>

The present disclosure includes methods, devices, and systems for turbine failure analysis. For example, embodiments of the present disclosure can provide accurate prediction of bearing and gearbox mechanical failures.

In one example embodiment, a computing device implemented method for turbine failure analysis includes collecting a first set of data associated with wind turbine performance, via a computing device, analyzing the first set of data to determine whether the first set of data can indicate a fault condition, and reviewing a second set of data associated with wind turbine performance to determine if a fault condition exists.

In various embodiments, the method can further include providing a notification to a user to take an action based upon the determination that a fault condition exists. Embodiments can also include determining a type of fault condition that exists from a number of possible fault conditions.

In some embodiments, providing the notification can include information regarding a type of action to take based upon the determined type of fault condition. Collecting a first set of data associated with wind turbine performance, via a computing device, as discussed above can include collecting supervisor control and data acquisition (SCADA) type data from at least one of: a set of wind turbine sensors, a computing device associated with a wind turbine, and a file in memory.

Analyzing the first set of data to determine whether the first set of data can indicate a fault condition includes analyzing one or more data items for a wind turbine operating under non-fault conditions. In some embodiments, analyzing the first set of data to determine whether the first set of data can indicate a fault condition includes analyzing one or more data items for a wind turbine operating under non-fault conditions and one or more data items for a wind turbine operating under fault conditions.

Analyzing the first set of data to determine whether the first set of data can indicate a fault condition can be accomplished, for example, by analyzing the first set of data using a clustering algorithm methodology, such as a self organizing feature map (SOFM) methodology. In some embodiments, analyzing the first set of data to determine whether the first set of data can indicate a fault condition includes analyzing the first set of data using a principal component analysis methodology.

One benefit of embodiments of the present disclosure can be that turbine operation and maintenance costs can be reduced through continuous monitoring of turbine health, resulting in improved reliability. More specifically, component failures (e.g., those that cause the highest failures) in wind turbines can be detected early such that they can be addressed, for example, before more costly damage occurs.

Although the present embodiments are not limited to detecting gearbox and/or generator component issues, currently, operational failures associated with the gearbox and/or generator components appear to be significant and appear to account for the largest downtime and/or expense for repair, so some discussion below is provided with respect to such issues.

For example, in one method embodiment a gearbox failure is predicted using supervisory control and data acquisition (SCADA) data. Embodiments of the present disclosure include interpreting the SCADA data to detect the gearbox failure and processes to utilize the SCADA data. Generally, wind turbine SCADA data is used for operational performance monitoring and control applications.

The approaches discussed herein include, for example, where SCADA data is segmented according to the wind turbine operation region. In such embodiments, the operation region can, for example, be defined by a control law as the control scheme is different at each region.

In such embodiments, features used to detect a failure are obtained from the same operational region. In various embodiments, if the features at the different operational region are observed, a same or similar pattern of features may be exhibited because of the region changes rather than the fault.

In this manner, the patterns indicating a failure in region A could be also producible in region B even though there is no fault. This may be true for various types of failure, not just a gearbox failure. The features can, for example, be viewed separately at each region and can be differentiated when the information is extracted from the data.

Another approach discussed herein provides that for a gearbox failure, the measurements which are relevant to gearbox operation from the whole set of data can be initially identified (e.g., power, High Speed Shaft (HSS) torque, speed, Low Speed Shaft (LSS) torque, speed, oil temperature, and/or oil pressure). In various embodiments, each individual measurement can be reviewed separately, and they can be compared to the baseline and fault conditions to determine differences.

In some embodiments, some combination of individual measurements can be reviewed. For example, a ratio of individual measurement (e.g., ratio of HSS torque and HSS speed, ratio of HSS speed and LSS speed, and/or normalized oil temperature with respect to ambient temperature) can be reviewed.

The values of these measurements (e.g., obtained via sensor data from the wind turbine or associated instrumentation) can be reviewed with respect to each other, rather than the values reviewed individually. For example, HSS torque vs. power, ratio of HSS torque or HSS speed vs. power, and/or etc., can be reviewed against each other.

From this process, the most indicative patterns for the gearbox fault can be identified. For example, patterns can be observed from the ratio of HSS torque or HSS speed vs. Power Electronics Power (PE power), the ratio of HSS speed or LSS speed vs. power, the normalized oil temperature vs. Power, and/or the oil pressure vs. power.

Anomaly detection for individual wind turbines may be developed with a data set collected. Analysis may be done, but is not limited to, using principal component analysis (PCA), and non-linear methods. For example, SOFM (Self Organizing Feature Maps) is a non-linear method, by which unsupervised learning can be used in a set of data with unknown features, for categorizing them into groups with similar features. A set of algorithms that look for anomalies in a sensor within a sensor group may be used in detecting anomalies with the SCADA data.

The automation of the fault detection and/or prediction can, for example, be done using the PCA and/or SOFM. The PCA can, for instance, be used to detect the anomalies and the SOFM can, for example, be used to isolate a fault. Alarms generated from a fault detection and isolation system can, for example, be composed of multiple (e.g., three indicators) indicators, for example, based on Qstat, T2stat from PCA, and/or a clustering number from SOFM. In the prior art, process parameters are not routinely used for fault detection and/or prediction and only used in a primitive form for safeguarding against large deviations in individual signals.

Provided below is one example configuration of an embodiment of the present disclosure. This example should not be viewed as limiting the cope of the embodiments of the present disclosure.

## Description on CART data

The Controls Advanced Research Turbine 2 (CART2) is a modified Westinghouse WWG-0600 machine rated at 600 kW. It is located at the National Wind Technology Center (NWTC) in Boulder, Colorado and was installed to test new control schemes for power and load regulation. In its original configuration, the WWG-0600 uses a synchronous generator, fluid coupling, and hydraulic collective pitch actuation.

However, the CART2 is fitted with an induction generator, rigid coupling, and individual electromechanical pitch actuators. The rotor runs upwind of the tower and includes two blades and a teetering hub.

As a research turbine, it is outfitted with many more sensors than would normally be installed on a wind farm turbine, including pressure transducers, torque transducers, strain gauges, thermometers, position encoders, accelerometers, anemometers, wind vanes, and power, current, and voltage meters. The output of each of these sensors is recorded at the control rate of 100 Hz. Total of 88 measurements are stored in 10 minute blocks including; Pitch Angles, Shaft Torque, Oil Temperature and Pressure, Yaw Positions, Wind Speeds and Directions, Ambient Temperature, Vibrations, Tower Loads, Generator Power/Current/Voltage, and other Control Signals. An example of the parameters includes:

'Teeter brake pressure'
'Pitch System Digital Outputs'
'Blade 1 Analog Output 1'
'Teeter Angle'
'Blade 1 Analog Output 2'
'Blade 1 Pitch'
'Blade 2 Analog Output 1'
'Blade 2 Pitch'
'Blade 2 Analog Output 2'
'LSS Torque'
'Blade 1 Edge Bending'
'Blade 1 Flap Bending'
'Blade 2 Edge Bending'
'Blade 2 Flap Bending'
'Gear Box Oil Temperature'
'HSS Position'
'Yaw Position'

'HSS Torque'
'LSS Position'
'Yaw Brake Pressure'
'Nacelle Digital Outputs'
'X Accelerometer Port'
'Y Accelerometer Port'
'Z Accelerometer Port'
'X Accelerometer Starboard'
'Y Accelerometer Starboard'
'Z Accelerometer Starboard'
'Nacelle Windspeed'
'Nacelle Wind Direction'
'Gearbox oil pressure'
'Nacelle ambient temperature'
'IMU - Roll'
'IMU - Pitch'
'IMU - Yaw'
'IMU - X'
'IMU - Y'
'IMU - Z'
'Generator Power'
'PE Digital Outputs'
'Generator Current'
'Generator Frequency'
'Generator Voltage'
'PE Power'
'PE kVA'
'PE Power Factor'
'Tower Bending E/W'
'Tower Bending N/S'
'Tower Bending E/W Poisson'
'Tower Bending N/S Poisson'
'Windspeed 58.2m'
'Wind Direction 58.2m'
'Temperature 58.2m'
'Windspeed 36.6m'
'Wind Direction 36.6m'
'Windspeed 15.0m'
'Wind Direction 15.0m'
'Windspeed 3.0m'
'Temperature 3.0m'
'Sonic U 36.6m'
'Sonic V 36.6m'
'Sonic W 36.6m'
'Barometric Pressure'
'GPS Year'
'GPS Month '
'GPS Day'
'GPS Hour'
'GPS Minute'
'GPS Second '
'GPS Tenths of Milliseconds '
'HSS RPM'
'LSS RPM'
'Air Density'
'HSS Power'
'LSS Power'
'LSS RPM rate of change'

'HSS RPM rate of change'
'Set Pitch 1'
'Set Pitch 2'
'Blade 1 Pitch Rate'
'Blade 2 Pitch Rate'
'Torque Demand'
'Torque Command'
'Digital outputs 1'
'Digital outputs 2'
'Normal stop bits 1'
'Emergency stop bits 1'
'Warning bits 1'
'Warning bits 2'

**Description on SOFM based method**

NEURAL NETWORKS CLUSTERING TECHNIQUE

Clustering algorithms are methods to divide a set of n observations into g groups so that members of the same group are more alike than members of different groups. If this is successful, the groups are called clusters.

Depending on the availability of class labels, there are two types of methods in learning the patterns in observations. When class labels of observations are available, supervised learning is used, otherwise unsupervised learning is appropriate. In unsupervised learning, there are no target outputs available. So the free parameters, such as weights and biases in neural networks, can be modified in response to network inputs only. In some embodiments, the input patterns are categorized into a number of classes.

Self Organizing Feature Map (SOFM)

A self organizing feature map (SOFM) is a specific type of clustering algorithm, forming neurons located on a regular, usually 1 or 2 dimensional grid. SOFM can detect regularities and correlations in their input and adapt their future responses to that input accordingly by learning to classify input vectors according to how they are grouped in the input space.

In other words, SOFM learns to recognize groups of similar input vectors in such a way that neurons physically near each other in the neuron layer respond to similar input vectors. In a classical *k*-means method, an observation can be mapped to the cluster whose representative is nearest to the observation.

This is what happens in SOFM, but additionally the training algorithm in SOFM attempts to map some structure to the representatives. In SOFM, a large number of clusters can be chosen, and arranged on a regular grid. The idea is that the representatives are spatially correlated, so that representatives at nearby points on the grid are more similar than those which are widely separated.

In SOFM, the cluster representatives, which are the neurons in the layer of a SOFM, are initially assigned at random in some suitable distribution according to a topology function which dictates the structure of the map. Whenever an observation **x** is presented, the closest representative $\mathbf{m}_j$ is found, which is identified as the winner. Then for all representatives i which are neighbors of j on the grid;

$$m_i(t+1) = m_i(t) + \alpha h_{ij}[x(t) - m_i(t)], \qquad \textit{for all neighbors i,}$$

where t denotes time, $\alpha$ is learning rate, and $h_{ij}$ is the neighborhood kernel around the winner neuron *j*. The learning rate $\alpha$ is allowed to change with time.

The neighborhood function determines how strongly the neurons are connected to each other. An example of a neighborhood function is a constant over the whole neighborhood of the winner neuron. Another function of time-varying type is the Gaussian neighborhood function

$$\exp\left(-\frac{\|r_j - r_i\|^2}{2\sigma^2(t)}\right)$$

where $r_j$ and $r_i$ are the locations of winner neuron $j$ and its neighborhood neurons $i$ on the map grid, respectively, and $\sigma(t)$ is the neighborhood radius at time $t$.

The neighborhood function and the number of neurons determine the granularity of the resulting mapping. The larger the area where neighborhood function has high values, the more rigid is the map.

The larger the map, the more flexible it can become. This interplay determines the accuracy and generalization capability of SOFM.

**Description on application**

In this work, the CART2 data is segmented according to the wind turbine operation region. The operation region is defined by a control law as the control scheme is different at each region.

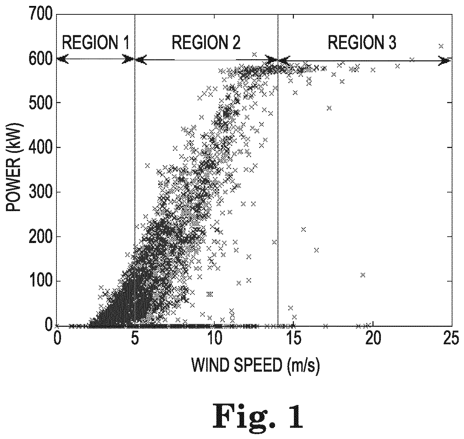

Figure 1 illustrates an example of wind turbine operation region data that can be utilized in one or more embodiments of the present disclosure. As shown in Figure 1, region 1, the section to the left of 5 m/s wind speed, includes the times when the turbine is not operating and when it is starting up. Region 2, shown by the section between the wind speeds of 5 to 14 m/s, is an operational mode in which it is desirable to capture as much power as possible from the wind.

Region 3 operation occurs above rated wind speed (i.e., the wind speed above which maximum peak power is produced). The turbine must limit the fraction of the wind power captured so as not to exceed electrical and mechanical design loads.

In embodiments of the present disclosure, the features used to detect the failure can be obtained from the same operational region. It is desired to decouple the real fault signatures from any signatures which are not caused by the fault but are similar to the ones when the fault exits.

The differences in the operating condition, the changes on the operating condition, and the differences in the ambient condition are the typical examples resulting in signatures similar to the ones caused by a real fault. Thus in this work, the CART2 data is segmented along with the operation regions, and the focus to observe the fault signatures is concentrated in region 2.

Generally, the region of interest will be selected depending on the type of failure mode. For example, if a target failure mode is expected to exhibit the most distinguishable fault signatures during the turbine startup period, then the observation will need to be focused on the region 1.

Or, if a target failure mode is expected to exhibit the signatures at the earliest time during the maximum power operation, the region of interest will be region 3 for the purpose of incipient fault detection. In this work, a target failure mode can be the gearbox failure which needs to be observed from the wider range of speed variations, thus our region of interest is the region 2 as it represents the wider range of operations.

Another part of data preprocessing can include the modification of the sampling rate. In one such example embodiment, the original CART2 data was collected, for example, at the sampling rate of 100 Hz (100 samples per second), as the main purpose of CART2 utilization is the test of control schemes.

Without considering the cost required for the data acquisition, it is preferred to have such high frequency speed data not only from the perspective of the control but also from the standpoint of the fault detection and/or diagnosis.

This is, for example, because the high frequency data contains the richer information or information that will not be available from the lower frequency data (i.e., more data points). The high frequency data will, in some implementations allow the system to address the faults that are not detectable due to the data quality limitations.

In some embodiments, original data set (e.g., the high frequency data) is down-sampled to 1 Hz (1 samples per second). The benefits can, for example, be; 1) that the fault signatures are still observed well from the lower sampled data, and 2) as mentioned earlier, that SCADA data for the Condition Based Maintenance (CBM) purposes can be utilized, in some embodiments, and the sampling frequency of SCADA data is much slower, typically 1 sample per minute.

In order to build a base line of data for forecasting the condition of a wind turbine data can be obtained from test turbines. For example, if it was reported that there was a gearbox related failure from CART2 data, the data measured at the time of the failure can be obtained and extensive data sets can be collected before and after the time of the failure.

The measurements which are relevant to gearbox operation can be extracted from the whole set of data. For example, this information can include the power, the torque at both high speed shaft (HSS) and/or low speed shaft (LSS), the speed at high speed shaft (HSS) and/or low speed shaft (LSS), the oil temperature, and/or the oil pressure.

In some embodiments, each individual measurement can be analyzed separately to see how they are different compared to a baseline condition and/or fault condition. Also the combination of individual measurements, for example, the ratio of individual measurement can be analyzed to observe any indications of the fault, in some embodiments.

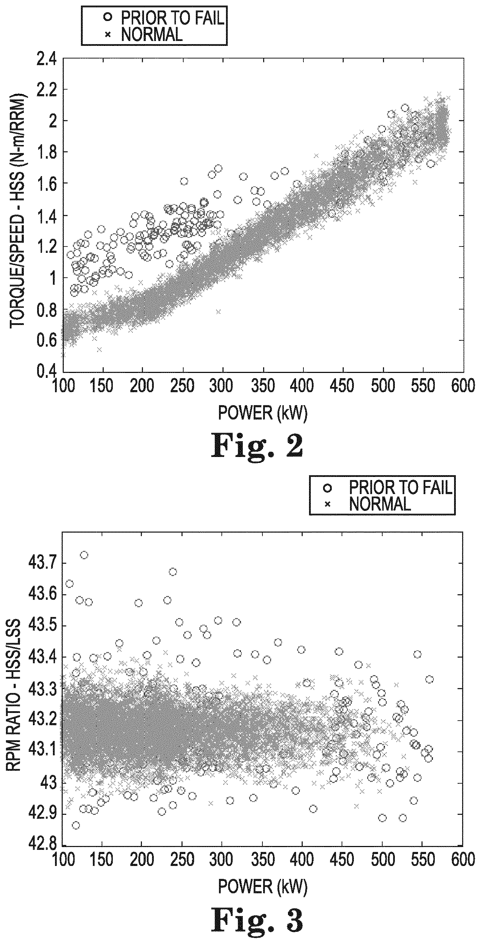

The changes against each other, rather than the changes of one item, for example, changes in HSS torque vs. power or the ratio of HSS torque to HSS speed vs. power, can be analyzed as well. From this process, the most indicative patterns for the gearbox fault can be identified, and they can be observed from the ratio of HSS torque or HSS speed vs. PE power, the ratio of HSS speed or LSS speed vs. power, the normalized oil temperature vs. power, as shown in Figure 2 and Figure 3. In both figures, the circles represent the faulty data and the x's represent the normal, baseline data. In this manner, the data indicative of a fault can be identified. In some embodiments, this process can be used to improve baseline and/or fault detection data.

Figure 2 illustrates an example of variations of a ratio of HSS torque to HSS speed along with the power level data that can be utilized in one or more embodiments of the present disclosure. This figure shows a distinction between the fault and the baseline data, especially at a relatively lower power level (< 400 kW) for the particular device on which the data was collected.

Such data collection and analysis can help identify the regions of a data set that may be most helpful in identifying faults. This can be beneficial, for example in focus data analysis efforts in these data regions and/or in selecting data to be extracted for data analysis or in selecting data to be discarded from a larger data set.

Figure 3 illustrates variations of the ratio of HSS speed to LSS speed along with the power level data that can be utilized in one or more embodiments of the present disclosure. In this type of embodiment, the distinction between the fault and the baseline can still be observed, though the indication may not be as strong as the data utilized in Figure 2 shows (e.g., the variation of the speed ratio from fault data is much larger across every power level and overlaps the variation of the baseline data). Such data collection and analysis can again be helpful to identify the regions of a data set that may be most beneficial in identifying faults.

In some embodiments, based on these observations, the fault detection and isolation can be done using the PCA and SOFM. For example, the PCA can be used to detect anomalies in the data set and the SOFM can be used to isolate a fault.

In some embodiments, alarms can be generated based on one or more indicators. Examples of suitable indicators include, but are not limited to, indicators from PCA based on Q-stat and/or $T^2$stat, and/or an indicator from SOFM based on one or more clusters of data.

In some embodiments, a training stage can be utilized wherein the system is calibrated based upon some initial data analysis. In some such embodiments, during the training stage, one or more sets of training can be prepared.

For example, one set of data can, for instance, be composed of Power, HSS torque, and HSS speed, and another set composed of Power, HSS torque, HSS speed, and LSS speed. The first set can, for example, be intended to capture the fault indication observed from Figure 2, and the second set can, for example, be intended to capture both of the fault indications observed from Figure 2 and Figure 3.

In some embodiments, the one or more data sets can be used to train Auto-Associative Neural Networks (AANN). This data can be prepared to ensure that it is representing wide possible operation range within the region 2 defined earlier.

In one example, the training (e.g., testing data) set includes data collected from operation of the device in which the data was collected during a number of time periods (e.g., October, January, December, November, February, March, April, and June over a time period of two years). In some such embodiments, the training data set for AANN is composed of baseline data only. In this manner, the baseline of the device analysis system can be defined and/or refined.

In some embodiments, training can be conducted using multiple data sets to determine which set may produce the best fault detection results. For example, having trained a system based on two different sets of data (e.g., one set composed of Power, HSS torque, and HSS speed, and the other set composed of Power, HSS torque, HSS speed, and LSS speed), it is found that the AANN trained with the first set produces better performances resulting in less false alarms and more successful detection than the second set. In such an embodiment, the training can then be focused on using one set of data, if desired.

In some embodiments, this testing can provide for inferences to be made regarding the testing and reasoning for one data sets success versus another data set. For example, the success of the first data set over the second above could be due to the wider spread of the speed ratio from the fault data shown in Figure 3 and may make the fault and the normal data less separable.

In some embodiments, the SOFM can also be trained. For example, when trained with the first and second data sets above, the better performance with the system trained with the first data set can also be observed with the training of SOFM.

The data sets used for the training of SOFM can be the same or similar to those used for AANN training. For example, in some embodiments, a difference between the training set of SOFM and the training set of AANN can be that the SOFM training set includes the fault data. Thus, the SOFM training data set is the augmentation of the AANN training set with the addition of the fault data.

Results

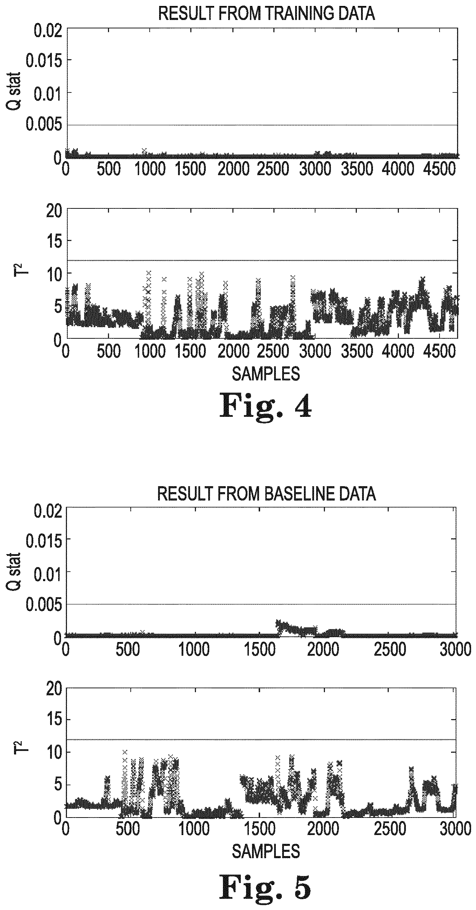

Figure 4 illustrates an example of Q-stat and $T^2$ values obtained from AANN using the training data set that can be utilized in one or more embodiments of the present disclosure. The horizontal lines represent the threshold limits indicating anomalies when a sample arises above the limit. The training data represents the baseline.

Figure 5 illustrates an example of a result from another baseline case and such data can be utilized in one or more embodiments of the present disclosure. This data may not be seen through a training stage. This baseline data set covers all seasons and the result from this data set can be used to measure a false alarm rate. There are no samples arising above the thresholds, thus no false alarms would be generated based upon this data.

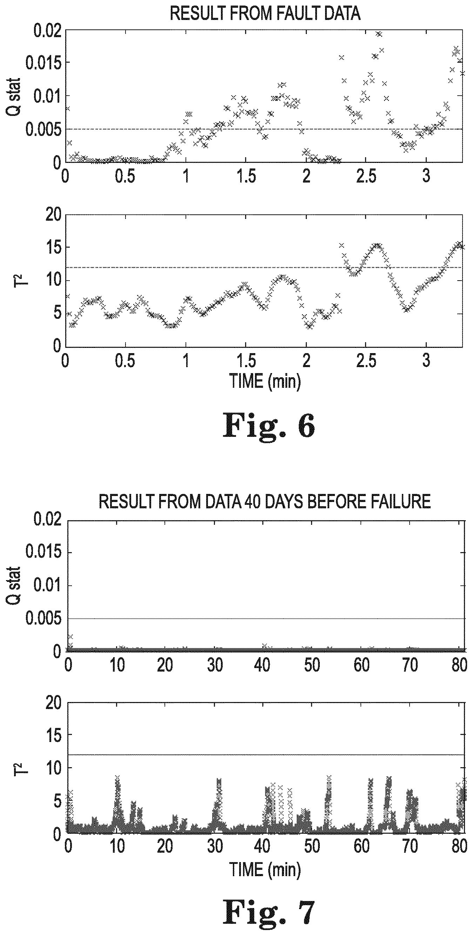

Figure 6 illustrates a result from data collected on a day when a gearbox failure occurred and such data can be utilized in one or more embodiments of the present disclosure. In this example data set, large values of both Q-stat and $T^2$ are observed. The samples of which Q-stat or $T^2$ values exceed a threshold indicate they are not representative of data that should be used to develop the AANN, which corresponds to the normal condition. This data can also be used in forming thresholds for detecting a fault condition and/or setting alarm thresholds, among other uses.

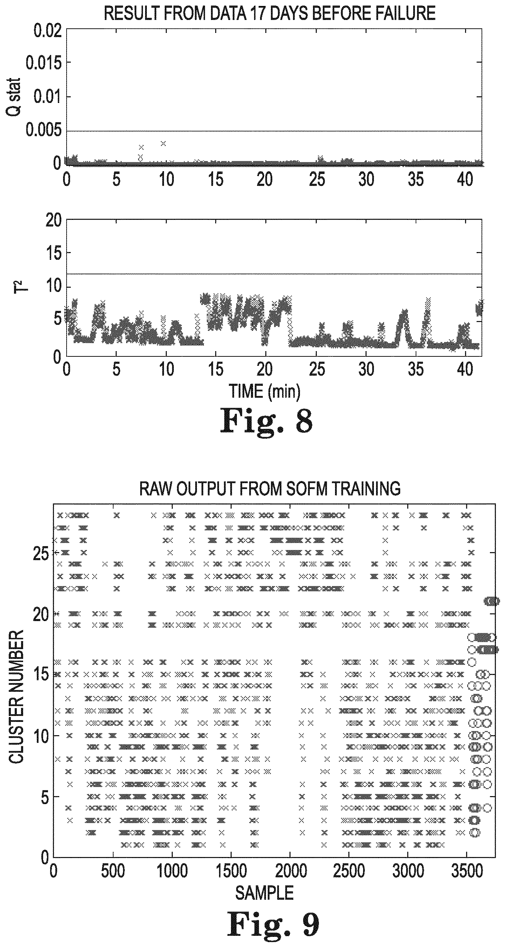

Figure 7 and Figure 8 illustrate a result from data collected before the failure and such data can be utilized in one or more embodiments of the present disclosure. Figure 7 is the data obtained 40 days before the failure and Figure 8 is the data obtained 17 days before the failure.

In this example, the data does not indicate the fault yet. The analysis on the consistency of the alarms as the time approaches closer to the failure time, or regarding how early the fault is detected can be achieved by analyzing the data collected in a time period around the day when the failure occurred. This time period for a particular type of event can be identified and/or refined based upon data collected from the occurrence or such events either on the device subject to this analysis or other devices that may provide similar results.

In an example, in some instances, information can be provided from resources outside the system. For instance, if the log book were reviewed, information regarding the failure, may be identified which can be used to further precision the analysis of the system.

For example, a log book may indicate that there was clunking noise heard while running the controller 14 days before the failure. This can be analyzed as to whether it is indicative of the start of the failure.

Figure 9 illustrates a result from the training of SOFM and such data can be utilized in one or more embodiments of the present disclosure. As mentioned above, the training set of SOFM can include not only the baseline data but also the fault data.

The first part of the data, up to the samples at around 3500, is the baseline data and they are marked with x's. The second part of the data, corresponding to the samples after 3500, is the fault data and they are marked with o's.

The y-axis represents the cluster number for the data. In such an embodiment, a clustering system having a number of clusters (e.g., 28 clusters) can be obtained after the training, and y-axis shows the cluster numbers from 1 to 28. As shown in the figure, there are no baseline samples which correspond to clusters number 17, 18, and 21, as only the samples among the fault data correspond to these clusters.

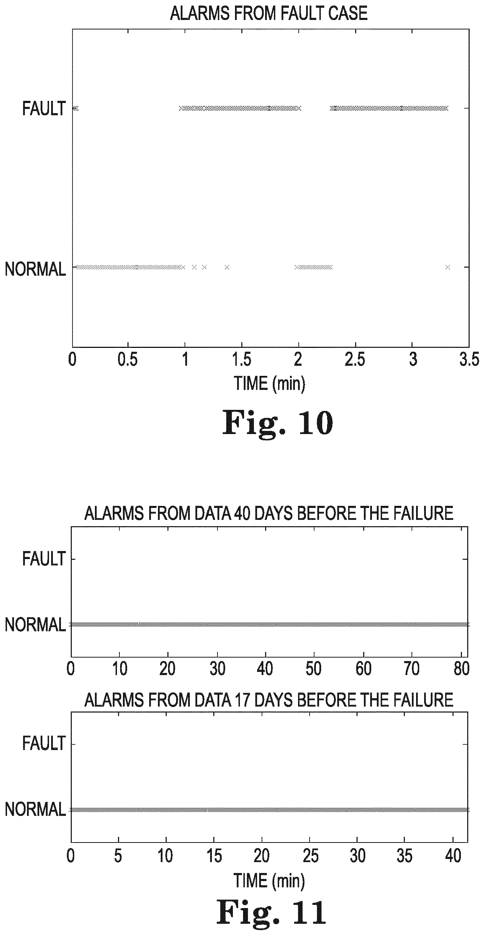

This indicates that the clusters number 17, 18, and 21 are formed based on the fault data only, thus they represent the fault condition. Whereas the other clusters correspond with the baseline data, thus they represent the normal condition. Based on this information, the mapping of the cluster numbers into the conditions can be accomplished and the result is shown in Figure 10.

Figure 10 illustrates alarm trigger conditions based on the fault data and such data can be utilized in one or more embodiments of the present disclosure. The samples shown in Figure 10 are the same as the second portion of the data marked using o's in Figure 9.

Regarding the fault isolation, the SOFM can, for example, be used for the isolation purpose because the different clusters are formed representing different faults. In the example shown, though the SOFM is able to isolate the faults, it is trained with only one failure mode as that is the only failure history that is available. However, as more different failure modes are identified, and they are observable from the same set of parameters, a SOFM can demonstrate the isolation capability of those faults as well, in some embodiments.

Figure 11 illustrates the result from the data closest to the failure day among the data available and such data can be utilized in one or more embodiments of the present disclosure. As noted earlier, no fault is indicated yet.

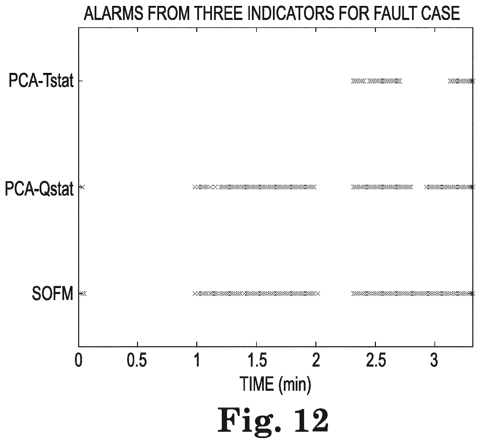

Figure 12 illustrates a comparison among alarms triggers of several different indicators and such data can be utilized in one or more embodiments of the present disclosure. In the embodiment illustrated, three indicators are provided, (e.g., two indicators from AANN based on Q-stat and $T^2$ and one indicator from SOFM based on a number of clusters). In this example, it can be seen that the alarms are consistent among them (i.e. when $T^2$ triggers the other two also trigger). Compared to $T^2$, earlier detection is possible from Q-stat and SOFM, in such embodiments.

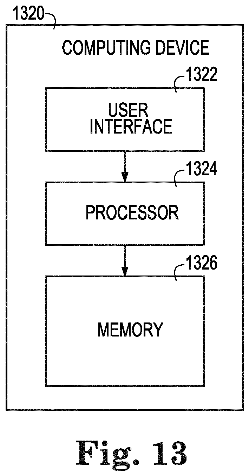

Figure 13 illustrates a computing system that can be utilized in one or more embodiments of the present disclosure. Computing device 1320 can be, for example, a desktop computing device, a laptop computing device, or a portable handheld computing device, such as, for instance, a portable handheld mobile phone, media player, or scanner. However, embodiments of the present disclosure are not limited to a particular type of computing device. In some embodiments, computing device 1320 can be a part of a wind turbine control and/or monitoring system.

As shown in Figure 13, computing device 1320 includes a user interface 1322. User interface 1322 can be a graphic user interface (GUI) that can provide (e.g., display and/or present) and/or receive information (e.g., data and/or images) to and/or from a user (e.g., operator) of computing device 1320.

For example, user interface 1322 can include a screen that can provide information to a user of computing device 1320 and/or receive information entered into a display on the screen by the user. However, embodiments of the present disclosure are not limited to a particular type of user interface.

In some embodiments, the data, which is, for example, input to the PCA and SOFM, can be provided to the computing device 1320, for example, through a cable in an automated way. Data can be provided directly via a connection between the computing device 1320 to the wind turbine or indirectly from a database in which the wind turbine data is located.

This could be accomplished, for instance in an on-line and/or off-line manner. For example, for an on-line operation, computing device 1320 can have a trigger condition for the data acquisition, and when the operation meets the trigger condition, then the PCA and/or SOFM can be performed and the results would be displayed. For instance, for and off-line operation, the data can be downloaded periodically and then processed accordingly (PCA and/or SOFM can be performed and the results displayed with the data collected during the operation of interest, like region 2, for example).

As shown in Figure 13, computing device 1320 includes a processor 1324 and a memory 1326 coupled to the processor 1324. Memory 1326 can be volatile or nonvolatile memory. Memory 1326 can also be removable (e.g., portable) memory, or non-removable (e.g., internal) memory. For example, memory 1326 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disk read-only memory (CD-ROM)), flash memory, a laser disk, a digital versatile disk (DVD) or other optical disk storage, and/or a magnetic medium such as magnetic cassettes, tapes, or disks, among other types of memory.

Further, although memory 1326 is illustrated as being located in computing device 1320, embodiments of the present disclosure are not so limited. For example, memory 1326 can also be located internal to another computing resource (e.g., enabling computer readable instructions to be downloaded over the Internet or another wired or wireless connection).

Memory 1326 can also store executable instructions, such as, for example, computer readable instructions (e.g., software), for acquiring wind turbine data from a wind turbine or from a database or other memory store of wind turbine data in accordance with one or more embodiments of the present disclosure. Processor 1324 can execute the executable instructions stored in memory 1326 to acquire wind turbine data in accordance with one or more embodiments of the present disclosure.

In some embodiments, a computer-readable non-transitory medium can be used for storing instructions for turbine fault analysis. These instructions can be executable by a processor of a computing device to cause the computing device to accomplish various tasks.

For example, in some embodiments, the instructions can be executed to collect a first set of data associated with wind turbine performance, via a computing device. The first set of data can be analyzed to determine whether the first set of data can indicate a fault condition based upon a data value that satisfies a threshold value. A second set of data associated with wind turbine performance can be reviewed to determine if a fault condition exists based on a comparison of the second set of data and the threshold value.

In various embodiments, the instructions can include instructions executable by the computer to analyze the first set of data to determine a baseline condition with respect to one or more performance characteristics. In some embodiments, the instructions include instructions executable by the computer to determine when a fault condition exists with respect to one or more performance characteristics.

The one or more performance characteristics can, for example, include at least one of power, torque at a high speed shaft, torque at a low speed shaft, speed at the high speed shaft, speed at the low speed shaft, oil temperature, and/or oil pressure may be used, among other wind turbine performance characteristics that may be utilized.

In some embodiments, such parameters can be beneficial in identifying different fault types or may be particularly advantageous in predicting a fault of a certain type. For example, when multivariate analysis is performed (e.g., the observation from some ratio vs. power), the results can be indicative of gearbox failure and can be particularly useful in predicting gearbox failure detection and isolation.

In some embodiments, the instructions include instructions executable by the computer to analyze the first set of data to determine whether the first set of data can indicate a fault condition based upon data that satisfies a threshold value with respect to one or more performance characteristics. As with the above embodiments, the one or more performance characteristics include at least one of power, torque at a high speed shaft, torque at a low speed shaft, speed at the high speed shaft, speed at the low speed shaft, oil temperature, and/or oil pressure may be used, among other wind turbine performance characteristics that may be utilized.

Some embodiments provide a computing device for turbine fault analysis. In various embodiments the computing device can, for example, include: a processor and memory, wherein the memory stores instructions, executable by the processor to cause the computing device to perform a number of functions.

For example, some computing device embodiments can collect a first set of data associated with wind turbine performance. The first set of data can be analyzed using at least one of a self organizing feature map methodology and a principle component analysis methodology to determine whether the first set of data can indicate a fault condition. A second set of data associated with wind turbine performance can be reviewed to determine if the fault condition exists.

In some embodiments, the analysis of the data using a self organizing feature map methodology, for example, utilized to detect an anomaly in the first set of data. The analysis of the first set of data using the principle component analysis methodology can be utilized, for example, to locate a fault based on the detection of the anomaly. The computing device can include instructions to train the computing device to analyze the data using at least one of a self organizing feature map methodology and a principle component analysis methodology to determine whether the data can indicate a fault condition, via an auto-associative neural network.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A computing device (1320) implemented method for turbine failure analysis, comprising:

collecting a first set of data associated with wind turbine performance and a second set of data associated with wind turbine performance by a set of wind turbine sensors via a computing device (1320);
segmenting the first and second sets of data into a number of wind turbine operational regions, wherein each region is defined by particular wind speeds;
analyzing the first set of segmented data to determine:

a baseline condition with respect to one or more performance characteristics; and
whether the first set of segmented data indicates a fault condition based upon a data value that satisfies a threshold value;

analyzing the second set of segmented data associated with wind turbine performance to determine if a fault condition exists based on a comparison of the second set of segmented data and the threshold value; and
providing a notification to take an action in response to the determination that the fault condition exists.

2. The method of claim 1, wherein the method further includes determining a type of fault condition that exists from a number of possible fault conditions.

3. The method of claim 2, wherein providing the notification includes information regarding a type of action to take based upon the determined type of fault condition.

4. The method of claim 1, wherein collecting the first set of segmented data associated with wind turbine performance, via a computing device (1320), includes collecting supervisor control and data acquisition type data from at least one of: the set of wind turbine sensors, a computing device associated with a wind turbine, and a file in memory (1326).

5. The method of claim 1, wherein analyzing the first set of segmented data to determine whether the first set of segmented data indicates the fault condition based on the data value satisfying a threshold value includes analyzing one or more data items for a wind turbine operating under non-fault conditions.

6. The method of claim 1, wherein analyzing the first set of segmented data to determine whether the first set of segmented data indicates the fault condition based on the data value satisfying a threshold value includes analyzing one or more data items for a wind turbine operating under non-fault conditions and one or more data items for a wind turbine operating under fault conditions.

7. The method of claim 1, wherein analyzing the first set of segmented data to determine whether the first set of segmented data indicates the fault condition based on the data value satisfying a threshold value includes analyzing the first set of segmented data using a clustering algorithm methodology.

8. The method of claim 7, wherein analyzing the first set of segmented data using the clustering algorithm methodology includes analyzing the first set of segmented data using a self organizing feature map methodology.

9. The method of claim 1, wherein analyzing the first set of segmented data to determine whether the first set of segmented data indicates the fault condition includes analyzing the first set of segmented data using a principal component analysis methodology.

**Patentansprüche**

1. Mittels Datenverarbeitungsvorrichtung (1320) realisiertes Verfahren zur Turbinenausfallanalyse, umfassend:

Erheben eines ersten Satzes von Daten im Zusammenhang mit einem Betriebsverhalten einer Windturbine und eines zweiten Satzes von Daten, die mit einem Betriebsverhalten einer Windturbine im Zusammenhang stehen, durch einen Satz von Windturbinensensoren über eine Datenverarbeitungsvorrichtung (1320);
Segmentieren des ersten und zweiten Satzes von Daten in eine Anzahl von Betriebsbereichen der Windturbine, wobei jeder Bereich durch bestimmte Windgeschwindigkeiten definiert ist;
Analysieren des ersten Satzes segmentierter Daten, um zu ermitteln:

eine Ausgangssituation in Bezug auf ein oder mehrere Betriebsverhaltensmerkmale; und
ob der erste Satz segmentierter Daten auf der Grundlage eines Datenwerts, der einen Schwellenwert erfüllt, einen Fehlerzustand anzeigt;
Analysieren des zweiten Satzes segmentierter Daten, die mit dem Betriebsverhalten der Windturbine im Zusammenhang stehen, um zu ermitteln, ob auf der Grundlage eines Vergleichs des zweiten Satzes segmentierter Daten und des Schwellenwerts ein Fehlerzustand vorliegt; und
Bereitstellen einer Benachrichtigung zur Einleitung einer Maßnahme als Reaktion auf die Feststellung, dass der Fehlerzustand vorliegt.

2. Verfahren nach Anspruch 1, wobei das Verfahren ferner ein Ermitteln einer Art von vorliegendem Fehlerzustand aus einer Anzahl möglicher Fehlerzustände beinhaltet.

3. Verfahren nach Anspruch 2, wobei das Bereitstellen der Benachrichtigung Informationen über eine Art von Maßnahme beinhaltet, die auf der Grundlage der ermittelten Art des Fehlerzustands zu ergreifen sind.

4. Verfahren nach Anspruch 1, wobei das Erheben des ersten Satzes segmentierter Daten, die mit dem Betriebsverhalten der Windturbine im Zusammenhang stehen, über eine Datenverarbeitungsvorrichtung (1320) ein Erheben von Daten des Typs Überwachungssteuerung und Datenerfassung mindestens eines beinhaltet aus: dem Satz von Windturbinensensoren, einer Datenverarbeitungsvorrichtung im Zusammenhang mit einer Windturbine und einer Datei im Speicher (1326).

5. Verfahren nach Anspruch 1, wobei ein Analysieren des ersten Satzes segmentierter Daten zur Ermittlung, ob der erste Satz segmentierter Daten auf der Grundlage des Datenwerts, der einen Schwellenwert erfüllt, den Fehlerzustand anzeigt, ein Analysieren eines oder mehrerer Datenelemente für eine Windturbine beinhaltet, die im fehlerfreien Zustand arbeitet.

6. Verfahren nach Anspruch 1, wobei das Analysieren des ersten Satzes segmentierter Daten zur Ermittlung, ob der erste Satz segmentierter Daten auf der Grundlage des Datenwerts, der einen Schwellenwert erfüllt, den Fehlerzustand anzeigt, das Analysieren eines oder mehrerer Datenelemente für eine Windturbine beinhaltet, die im fehlerfreien Zustand arbeitet, und eines oder mehrerer Datenelemente für eine Windturbine, die im Fehlerzustand arbeitet.

**7.** Verfahren nach Anspruch 1, wobei das Analysieren des ersten Satzes segmentierter Daten zur Ermittlung, ob der erste Satz segmentierter Daten auf der Grundlage des Datenwerts, der einen Schwellenwert erfüllt, den Fehlerzustand anzeigt, das Analysieren des ersten Satzes segmentierter Daten unter Verwendung einer Clustering-Algorithmus-Methodik beinhaltet.

**8.** Verfahren nach Anspruch 7, wobei das Analysieren des ersten Satzes segmentierter Daten unter Verwendung der Clustering-Algorithmus-Methodik das Analysieren des ersten Satzes segmentierter Daten unter Verwendung einer selbstorganisierenden Feature-Map-Methodik beinhaltet.

**9.** Verfahren nach Anspruch 1, wobei die Analyse des ersten Satzes segmentierter Daten zur Ermittlung, ob der erste Satz segmentierter Daten den Fehlerzustand anzeigt, das Analysieren des ersten Satzes segmentierter Daten unter Verwendung einer Hauptkomponentenanalysemethodik beinhaltet.

**Revendications**

**1.** Dispositif informatique (1320) mis en œuvre pour une analyse de défaillance de turbine, comprenant :

la collecte d'un premier ensemble de données associées à des performances d'éoliennes et d'un second ensemble de données associées à des performances d'éoliennes par un ensemble de capteurs d'éoliennes, via un dispositif informatique (1320) ;
la segmentation des premier et second ensembles de données en un certain nombre de régions opérationnelles d'éoliennes, dans lequel chaque région est définie par des vitesses particulières de vent ;
l'analyse du premier ensemble de données segmentées pour déterminer :

une condition de base par rapport à au moins une caractéristique de performances ; et
si le premier ensemble de données segmentées indique une condition de défaillance en fonction de la vérification d'une valeur de seuil par une valeur de données ;
l'analyse du second ensemble de données segmentées associées aux performances d'éolienne pour déterminer s'il existe une condition de défaillance, en fonction d'une comparaison du second ensemble de données segmentées à la valeur de seuil ; et
l'apport d'une notification pour entreprendre une action en réponse à la détermination de l'existence de la condition de défaillance.

**2.** Procédé selon la revendication 1, dans lequel le procédé comprend en outre la détermination d'un type de condition de défaillance qui existe à partir d'un certain nombre de conditions de défaillance possibles.

**3.** Procédé selon la revendication 2, dans lequel la fourniture de la notification comprend des informations concernant un type d'action à entreprendre en fonction du type déterminé de condition de défaillance.

**4.** Procédé selon la revendication 1, dans lequel la collecte du premier ensemble de données segmentées associées aux performances d'éolienne, via un dispositif informatique (1320), comprend la collecte de données de commande de supervision et de données de type d'acquisitions de données à partir d'au moins un élément parmi : l'ensemble de capteurs d'éolienne, un dispositif informatique associé à une éolienne et un fichier en mémoire (1326).

**5.** Procédé selon la revendication 1, dans lequel l'analyse du premier ensemble de données segmentées, visant à déterminer si le premier ensemble de données segmentées indique la condition de défaillance en fonction de la vérification d'une valeur de seuil par la valeur de données, comprend l'analyse d'au moins un élément de données, pour une éolienne fonctionnant en conditions hors défaillance.

**6.** Procédé selon la revendication 1, dans lequel l'analyse du premier ensemble de données segmentées, visant à déterminer si le premier ensemble de données segmentées indique la condition de défaillance en fonction de la vérification d'une valeur de seuil par la valeur de données, comprend l'analyse d'au moins un élément de données, pour une éolienne fonctionnant en conditions hors défaillance, et d'au moins un élément de données, pour une éolienne fonctionnant dans des conditions de défaillance.

**7.** Procédé selon la revendication 1, dans lequel l'analyse du premier ensemble de données segmentées, visant à déterminer si le premier ensemble de données segmentées indique la condition de défaillance en fonction de la vérification d'une valeur de seuil par la valeur de données, comprend l'analyse du premier ensemble de données segmentées selon une méthodologie d'algorithme de regroupement.

8. Procédé selon la revendication 7, dans lequel l'analyse du premier ensemble de données segmentées selon la méthodologie d'algorithme de regroupement comprend l'analyse du premier ensemble de données segmentées selon une méthodologie de carte de caractéristiques à organisation automatique.

9. Procédé selon la revendication 1, dans lequel l'analyse du premier ensemble de données segmentées, visant à déterminer si le premier ensemble de données segmentées indique la condition de défaillance, comprend l'analyse du premier ensemble de données segmentées selon une méthodologie d'analyse en composantes principales.

Fig. 1

Fig. 2

Fig. 3

Fig. 4

Fig. 5

Fig. 6

Fig. 7

Fig. 8

Fig. 9

Fig. 10

Fig. 11

ALARMS FROM THREE INDICATORS FOR FAULT CASE

Fig. 12

Fig. 13

**EP 2 487 553 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2011020122 A